# EUROPEAN PATENT SPECIFICATION

(11) **EP 3 200 297 B1**
(45) Date of publication and mention of the grant of the patent: **05.08.2020**
(21) Application number: 15843726.9
(22) Date of filing: 25.09.2015
(51) Int. Cl.: H02B 11/10

(54) **CIRCUIT BREAKER DRAWER BASE POSITION-INDICATING APPARATUS**
VORRICHTUNG ZUR STELLUNGSANZEIGE EINES AUSFAHRBAREN LEISTUNGSSCHALTERS
DISPOSITIF D'INDICATION DE POSITION D'UN DISJONCTEUR DÉBROCHABLE

(30) Priority: 27.09.2014 CN 201410502514
(43) Date of publication of application: 02.08.2017
(73) Proprietor: Zhejiang Chint Electrics Co., Ltd., Yueqing, Zhejiang 325603 (CN)
(72) Inventor: WANG, Keming, Yueqing Zhejiang 325603 (CN); LUO, Jingxiang, Yueqing Zhejiang 325603 (CN); YANG, Yingjie, Yueqing Zhejiang 325603 (CN)
(74) Representative: Petraz, Gilberto Luigi
(86) International application number: PCT/CN2015/090774
(87) International publication number: WO 2016/045624

(56) References cited:
- CN-A- 101 034 792
- CN-A- 102 290 725
- CN-A- 103 647 223
- CN-A- 104 300 411
- CN-U- 201 774 171
- CN-U- 203 574 278
- CN-U- 204 190 245
- DE-A1- 4 413 182
- JP-A- H11 178 130
- JP-A- 2008 011 582
- KR-A- 20110 073 041

## Description

### TECHNICAL FIELD

The present invention relates to an intelligent air circuit breaker, in particular to an intelligent air circuit breaker with a position indicating device of a circuit breaker drawer seat, belonging to the manufacturing field of low-voltage apparatuses.

### BACKGROUND ART

With rapid development of a modernized intelligent power supply and distribution technology, the growing requirements are proposed for an intelligent air circuit breaker, and especially it is necessary to provide position states of a circuit breaker at three positions where a circuit breaker body and a drawer seat are connected, tested and separated relatively, and output corresponding electric control and indicating switch signals to the corresponding positions of connection, test and separation. Therefore, the requirements on local maintenance and repair can be met, and real-time transfer and remote monitoring of accurate display of the position states of the intelligent air circuit breaker by an intelligent power supply and distribution network can be realized. However, the existing air circuit breaker realizes the function of indicating three position states of connection, test and separation generally adopting a purely mechanical indicting structure; although the local maintenance and repair requirements can be met, the three position states of connection, test and separation cannot be converted into an on/off output mode for remote monitoring and indicating, and therefore, the requirement of the intelligent power supply and distribution network to whole-course state monitoring of the intelligent air circuit breaker cannot be met, and the application of the intelligent air circuit breaker is limited.

The conversion of the positions of connection, test and separation into switching signals or on/off control output modes for remote monitoring and indicating by a microswitch is relatively universal at present, for example, an existing drawer type frame circuit breaker realizes conversion and output of three-position on/off outputs by utilizing a mode under which an original supporting plate of the drawer type circuit breaker makes direct contact with a contact switch. But because the linear precision of the supporting plate that moves linearly is very low, a large amount of over-strokes are generated randomly when the supporting plate is in contact fit with the contact support, that is to say, the position where the supporting plate is in contact fit with the contact switch actually changes a lot, whereas the contact indicating switch has a relatively small stroke and is relatively subtle, the transmission impact force of the drawer seat is very large, and it is apparent that such over-stroke or position change easily causes great damage to the contact switch; in addition, the supporting plate is driven by a screw rod, such that the acting force of the supporting plate to the contact switch not only has great power, but also has very high rigidity, and the threatening degree to the service life of the contact switch is apparent when such damage power and acting force directly act on the subtle contact switch having very small switching stroke. As another example, in a three-position five-state electric signal output device of a circuit breaker of the prior art, because the acting force of a rotating shaft to a microswitch not only has great power, but also has very high rigidity, the structure of the prior art also poses a great threat to the service life of the microswitch.

It can thus be seen that the existing representative technologies have the following defects: a drive piece that is in contact fit with the microswitch fails to limit a contact position and a stroke range thereof relative to the microswitch, and also fails to reduce the destructive acting force from the screw rod or rotating shaft of the circuit breaker, that acts on the microswitch, thereby inevitably causing the problems of easy damage of the microswitch, easy failure of signal indication and poor reliability of position states, however, the risk to the safety of the intelligent power supply and distribution network resulting from these problems should be avoided.

Document CN 101 034 792 A discloses a pull-out type circuit breaker having a position indicating device comprising a separation, a test and a connection position switch located on a plate fixed on a side plate of a cradle receiving the breaker unit. The position indicating device further comprises a drive piece fixed to a side plate of the breaker unit and directly driving the operating levers of the position switches.

Document KR 2011 0073041 A discloses circuit breaker including a position display switch is provided to accurately display the position of a circuit breaker body on a cradle by using a driving device mounted on the cradle.

Document CN 201 774 171 U discloses a position signal acquisition and transmission device of a drawer-type circuit breaker.

Document JP H11 178130 A discloses a device for detecting that a drawer type breaker is in an operating position and a testing position, respectively.

Document DE 44 13 182 A1 discloses device for signalling the position of a drawer or insert in a switch-cabinet.

### SUMMARY OF THE INVENTION

With respect to the defects existing in the prior art, an objective of the present invention is to provide a circuit breaker, that has a reasonable structure design, follows an institutive objective motion law existing in realization of three position operating processes where an air circuit breaker body and a drawer seat are connected, tested and separated relatively, smartly avoids the shortcomings of large fluctuation in indication stability and accuracy of electric signal outputs at three positions caused by an existing mechanism, not only has reliable and reliable performances and effectively prolongs the service life and intelligentized working reliability of the circuit breaker product, but also is simple and convenient to assemble, operate and maintain.

To achieve the objective, the present invention adopts the following technical solutions.

A circuit breaker comprising a position indicating device according to the invention is defined in claim 1.

Preferably, the separation lever 15 is provided with a first axle hole 153 for pivoting installation, a first execution surface 151 which is in contact fit with an operating rod 121 of the separation contact switch 12, a first circular arc surface 152 which is in knocking fit with the execution shaft pin 41, a first separation forward gear surface 15a which is in blocking fit with the separation forward gear protruding column 12a, and a first separation backward gear surface 15b which is in blocking fit with the separation backward gear protruding column 12b.

Preferably, the test lever 16 is provided with a second axle hole 163 for pivoting installation, a second execution surface 161 which is in contact fit with an operating rod 131 of the test contact switch 13, a second circular arc surface 162 which is in knocking fit with the execution shaft pin 41, a second test forward gear surface 16a which is in blocking fit with the test forward gear protruding column 13a, and a second test backward gear surface 16b which is in blocking fit with the test backward gear protruding column 13b.

Preferably, the test lever 17 is provided with a third axle hole 173 for pivoting installation, a third execution surface 171 which is in contact fit with an operating rod 141 of the connection contact switch 14, a third circular arc surface 172 which is in knocking fit with the execution shaft pin 41, a third connection forward gear surface 17a which is in blocking fit with the connection forward gear protruding column 14a, and a third connection backward gear surface 17b which is in blocking fit with the connection backward gear protruding column 14b.

Preferably, the execution shaft pin 41 of the indicating drive piece 4 knocks on and drives the separation lever 15 to make contact with the separation contact switch 12 when the body switch 3 is moved to the separation position, this contact triggers conversion of an on/off state of the separation contact switch 12, and meanwhile, the execution shaft pin 41 drives the separation lever 15 to make contact with the separation forward gear protruding column 12a; the execution shaft pin 41 of the indication drive piece 4 is separated from the separation lever 15 when the body switch 3 is away from the separation position, a resetting force of the separation contact switch 12 drives the separation lever 15 to make contact with the separation backward gear protruding column 12b, and meanwhile, the separation contact switch 12 automatically resets under the action of the resetting force thereof and the on/off state thereof is converted.

Preferably, the execution shaft pin 41 of the indicating drive piece 4 knocks on and drives the test lever 16 to make contact with the test contact switch 13 when the body switch 3 is moved to the test position, this contact triggers conversion of an on/off state of the test contact switch 13, and meanwhile, the execution shaft pin 41 drives the test lever 16 to make contact with the test forward gear protruding column 13a; the execution shaft pin 41 of the indication drive piece 4 is separated from the test lever 16 when the body switch 3 is away from the test position, a resetting force of the test contact switch 13 drives the test lever 16 to make contact with the test backward gear protruding column 13b, and meanwhile, the test contact switch 13 automatically resets under the action of the resetting force thereof and the on/off state thereof is converted.

Preferably, the execution shaft pin 41 of the indicating drive piece 4 knocks on and drives the connection lever 17 to make contact with the connection contact switch 14 when the body switch 3 is moved to the connection position, this contact triggers conversion of an on/off state of the connection contact switch 14, and meanwhile, the execution shaft pin 41 drives the connection lever 17 to make contact with the connection forward gear protruding column 14a; the execution shaft pin 41 of the indication drive piece 4 is separated from the connection lever 17 when the body switch 3 is away from the connection position, a resetting force of the connection contact switch 14 drives the connection lever 17 to make contact with the connection backward gear protruding column 14b, and meanwhile, the connection contact switch 14 automatically resets under the action of the resetting force thereof and the on/off state thereof is converted.

Preferably, the fixing plate 11 is fixedly installed on an inside surface of a big side plate 21 of the drawer seat 2; the separation lever 15, the test lever 16 and the connection lever 17 of the position indicating assembly 1 are of the same L-shaped structure respectively. As further preferred, the rotating structures include three locating shaft pins 12C, 13C and 14C fixedly provided on the fixing plate 11, and a first axle hole 153, a second axle hole 163 and a third axle hole 173 that are provided in the separation lever 15, the test lever 16 and the connection lever 17 respectively.

According to the present invention according to any one of the above technical solutions, a structure in which the position indicating assembly and the indicating drive piece are adopted not only ensures that a lever that is in contact fit with a contact switch has a precise stroke, but also ensures that a position where the lever is in contact fit with the contact switch has very high repeat precision, thereby completely avoiding the damage to the subtle contact switch resulting from inaccurate locating over-stroke, large driving force, large impact force and the like of a body switch of the circuit breaker and ensuring that a contact indicating switch can always indicate three position states of the circuit breaker reliably and accurately, such that the intelligent power supply and distribution network can perform control, transmission and application on other systems according to position state signals of the circuit breaker. In addition, there are a plurality of selections in the present invention in terms of the modes under which the separation contact switch 12, the test contact switch 13 and the connection contact switch 14 are fixed on the fixing plate 11 on the big side plate 21 of the drawer seat 2, such that assembly and maintenance of the position indicating device will not be limited by the size of an internal space of the air circuit breaker.

### BRIEF DESCRIPTION OF THE DRAWINGS

Fig. 1 is a stereoscopic structural schematic drawing of the drawer seat 2 of the circuit breaker drawer seat of the present invention.
Fig. 2 is a stereoscopic structural schematic drawing of the body switch 3 of the circuit breaker of the present invention.
Fig. 3 is a stereoscopic structural schematic drawing of the position indicating assembly 1 in the position indicating device of the circuit breaker drawer seat of the present invention.
Fig. 4 is a stereoscopic structural schematic drawing of the separation lever 15 in the position indicating device of the circuit breaker drawer seat of the present invention as illustrated in Fig. 1.
Fig. 5 is a stereoscopic structural schematic drawing of the test lever 16 in the position indicating device of the circuit breaker drawer seat of the present invention as illustrated in Fig. 1.
Fig. 6 is a stereoscopic structural schematic drawing of the connection lever 17 in the position indicating device of the circuit breaker drawer seat of the present invention as illustrated in Fig. 1.

### DETAILED DESCRIPTION OF THE PREFERRED EMBODIMENTS

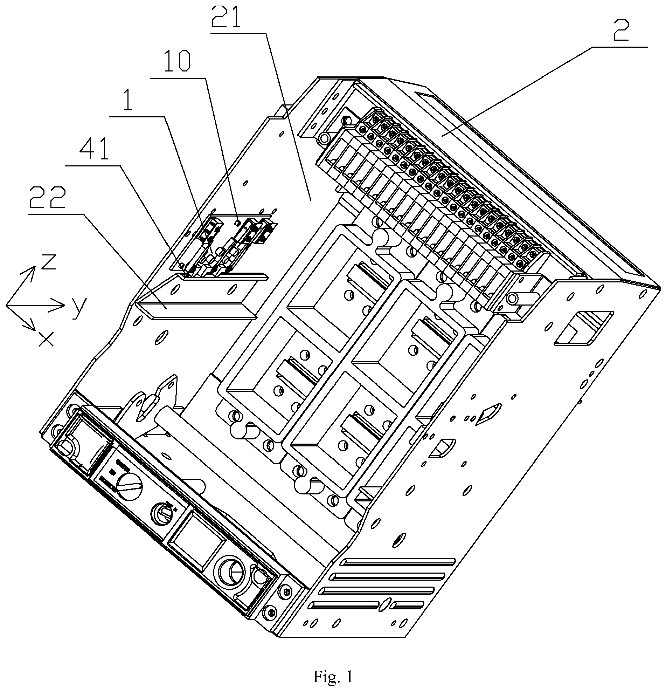

Specific embodiments of a position indicating device of a circuit breaker drawer seat of the present invention are further illustrated as below in conjunction with the embodiments provided by Figs. 1 to 6. The description of the following embodiments is not restrictive to the position indicating device of the circuit breaker drawer seat of the present invention.

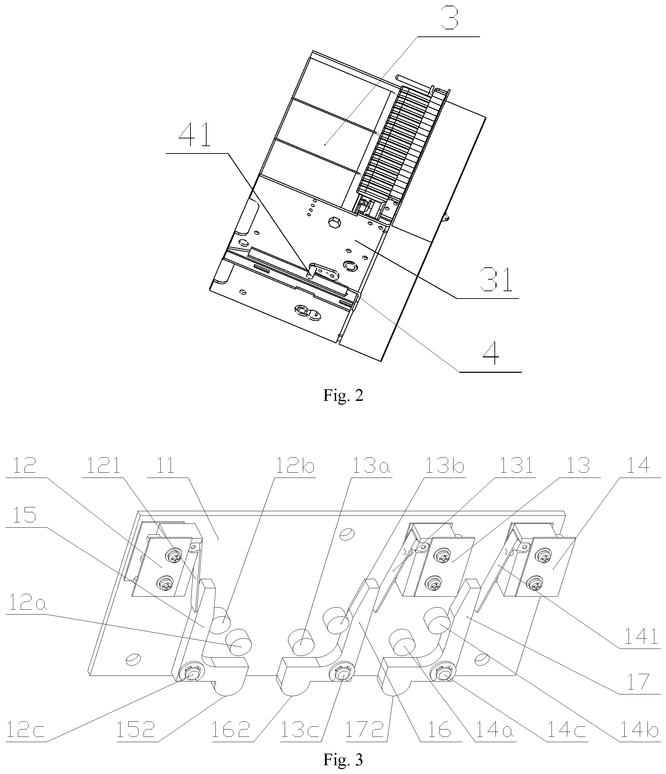

As illustrated in Fig. 1, the circuit breaker comprises a drawer seat 2 provided with a big side plate 21 for fixing a guide rail 22; as illustrated in Fig. 2, the circuit breaker comprises a body switch 3 and a handle screw rod assembly (not shown), wherein the body switch 3 of the circuit breaker is detachably installed on the guide rail 22 (referring to Fig. 1) of the drawer seat 2, the handle screw rod assembly drives the body switch 3 to linearly move to the three positions where the body switch 3 and the drawer seat 2 are separated, tested and connected relatively, and the body switch 3 can make a linear movement relative to the drawer seat 2 by means of the guide rail 22. As illustrated in Fig. 1 and Fig. 2, the position indicating device of the present invention comprises a position indicating assembly 1 (referring to Fig. 1) and an indicating drive piece 4 (referring to Fig. 2), wherein the position indicating assembly 1 comprises a fixing plate 11 fixed on an inside surface of the big side plate 21 of the drawer seat 2 and a separation contact switch 12, a test contact switch 13, a connection contact switch 14, a separation forward gear protruding column 12a, a separation backward gear protruding column 12b, a test forward gear protruding column 13a, a testing backward protruding column 13b, a connection forward gear protruding column 14a and a connection backward gear protruding column 14b which are fixed on the fixing plate 11 respectively, and further comprises a separation lever 15, a test lever 16 and a connection lever 17 that are pivoted to the fixing plate 11 through rotating structures. Referring to Fig. 2, the indicating drive piece 4 is fixed to a small side plate 31 of the body switch 3 and provided with an execution shaft pin 41 that, as illustrated in Fig. 3, is in knocking fit with the separation lever 15, the test lever 16 and the connection lever 17 of the position indicating assembly 1 respectively when the body switch 3 is moved to the three working positions of separation, test and connection respectively, so that the separation lever 15 can be driven to be in contact fit with the separation contact switch 12, the test lever 16 can be driven to be in contact fit with the test contact switch 13, and the connection lever 17 can be driven to be in contact fit with the connection contact switch 14, by such knocking fit.

The position indicating device of the circuit breaker drawer seat of the present invention is a component applicable to various drawer type air circuit breakers. Such circuit breaker comprises a drawer seat 2 of a known structure form, a body switch 3 and a handle screw rod assembly, wherein the drawer seat 2 is provided with a big side plate 21 for fixing the guide rail 22; the body switch 3 is detachably installed on the guide rail 22 of the drawer seat 2, and can make a linear movement relative to the drawer seat 2 by means of the guide rail 22. The guide rail 22 can be realized by adopting a known structure and has the following functions: installing and bearing the body switch 3; ensuring that the borne body switch 3 can make a linear movement and also can stay at certain working position among a separation position, a test position or a connection position. The handle screw rod assembly can be realized by adopting a known structure and has the following functions: the body switch 3 can be driven to a make a linear movement by artificially rotating a handle, and the body switch 3 can be stopped by stopping rotating the handle. The position indicating device of the present invention has a function of indicating three working positions (referring to a separation position, a test position and a connection position) of the body switch 3 relative to the drawer seat 2. The body switch 3 is completely separated from a main circuit when the body switch 3 is in the separation position, and in this separation position, the body switch 3 can be detached from the drawer seat 2 or move forwards to the test position under the driving of the handle screw rod assembly; the body switch 3 is incompletely connected with the main circuit when the body switch 3 is in the test position, so as to provide a necessary safe environment for detection and maintenance, and in this test position, the body switch 3 can move backs to the separation position under the driving of the handle screw rod assembly or move forwards to the connection position; the body switch 3 is completely connected with the main circuit when the body switch 3 is in the connection device, such that the air circuit breaker completely enters a normal working state, and in this connection position, the body switch 3 can move back to the test position under the driving of the handle screw rod assembly.

The position indicating assembly 1 of the position indicating device of the circuit breaker drawer seat of the present invention comprises a fixing plate 11 fixed on the big side plate 21, wherein the fixing plate 11 is fixedly installed on an inside surface of the big side plate 21 of the drawer seat 2 with a plurality of ways of fixed connection structures, for example, fixed connection with a screw 10 as illustrated in Fig. 1. Of course, fixed connection of other mode is still a possibility. The position indicating assembly 1 of the position indicating device of the circuit breaker drawer seat of the present invention further comprises a separation contact switch 12, a test contact switch 13, a connection contact switch 14, a separation forward gear protruding column 12a, a separation backward gear protruding column 12b, a test forward gear protruding column 13a, a testing backward protruding column 13b, a connection forward gear protruding column 14a and a connection backward gear protruding column 14b which are fixed on the fixing plate 11 respectively, and a separation lever 15, a test lever 16 and a connection lever 17 that are pivoted to the fixing plate 11 through rotating pair structures. There are a plurality of ways of fixed connection structures by which the separation contact switch 12, the test contact switch 13 and the connection contact switch 14 are fixedly installed on the fixing plate 11 respectively, generally a universal screw connection structure being adopted. There are a plurality of ways of fixed connection structures by which the separation forward gear protruding column 12a, the separation backward gear protruding column 12b, the test forward gear protruding column 13a, the test backward gear protruding column 13b, the connection forward gear protruding column 14a and the connection backward gear protruding column 14b are fixedly installed on the fixing plate 11 respectively, generally a fixed connection structure of riveting or interference fit being adopted. The separation lever 15, the test lever 16 and the connection lever 17 are pivoted to the fixing plate 11 respectively through respective rotating pair structure, and the rotating pair structure here refers to a connecting structure only having one rotational degree of freedom and can be implemented in a plurality of ways, wherein one preferred way is as illustrated in Fig. 1 and Fig. 2; the rotating pair structures include three locating shaft pins 12C, 13C and 14C that are fixedly provided on the fixing plate 11, and a first axle hole 153, a second axle hole 163 and a third axle hole 173 that are provided in the separation lever 15, the test lever 16 and the connection lever 17 respectively, wherein the three locating shaft pins 12C, 13C and 14C are provided in the first axle hole 153, the second axle hole 163 and the third axle hole 173 respectively.

The indicating drive piece 4 of the position indicating device of the circuit breaker drawer seat of the present invention is fixed on a small side plate 31 of the body switch 3. The small side plate 31 is an inherent structure of the body switch 3, and after the body switch 3 is installed on the drawer seat 2, the small side plate 31 of the body switch 3 is parallel to the big side plate 21 of the drawer seat 2. There are a plurality of implementation ways in terms of the structure that the indicating drive piece 4 is fixed on the small side plate 31 of the body switch 3, generally riveting connection or screw connection being adopted. An execution shaft pin 41 is provided on the indicating drive piece 4 and can be integrally formed with the indicating drive piece 4, or may be of a structure of fixed connection after split forming. The execution shaft pin 41 is in knocking fit with the separation lever 15, the test lever 16 and the connection lever 17 respectively, that is, the body switch 3 is installed on the guide rail 22 of the drawer seat 2 and then can make a linear movement under the driving of the handle screw rod assembly, and such movement makes the execution shaft pin 41 form the following relation of knocking fit and linkage thereof with the separation lever 15, the test lever 16 and the connection lever 17 respectively: when the body switch 3 is moved to the three working positions of separation, test and connection respectively at different times, the execution shaft pin 41 is in knocking fit with the separation lever 15, the test lever 16 and the connection lever 17 respectively, the separation lever 15 is driven to be in contact fit with the separation contact switch 12 respectively, the test lever 16 is driven to be in contact fit with the test contact switch 13, and the connection lever 17 is driven to be in contact fit with the connection contact switch 14. To be specific, when the body switch 3 is moved to the separation position, the execution shaft pin 41 is in knocking fit with the separation lever 15, and the separation lever 15 is in contact fit with the separation contact switch 12; when the body switch 3 is moved to the test position, the execution shaft pin 41 is in knocking fit with the test lever 16, and the test lever 16 is in contact fit with the test contact switch 13; when the body switch 3 is moved to the connection position, the execution shaft pin 41 is in knocking fit with the connection lever 17, and the connection lever 17 is in contact fit with the connection contact switch 14. The "knocking fit" here refers to the fit that the execution shaft pin 41 makes contact with and extrudes the separation lever 15, the test lever 16 or the connection lever 17. Of course, in case that the execution shaft pin 41 is separated from the separation lever 15, the test lever 16 or the connection lever 17, the knocking fit is released. The "contact fit" here refers to the fit in which the separation lever 15 makes contact with the separation contact switch 12 and converts an on/off state of the separation contact switch 12, the test lever 16 makes contact with the test contact switch 13 and converts an on/off state of the test contact switch 13, and the connection lever 17 makes contact with the connection contact switch 14 and converts an on/off state of the connection contact switch 14. Of course, in case that the execution shaft pin 41 is separated from the separation lever 15, the test lever 16 or the connection lever 17, the separation lever 15 and the separation contact switch 12 are automatically reset under the action of a resetting force of the separation contact switch 12 and the on/off switch is recovered, the test lever 16 and the test contact switch 13 are automatically reset under the action of a resetting force of the test contact switch 13 and the on/off state is recovered, and the connection lever 17 and the connection contact switch 14 are automatically reset under the action of a resetting force of the connection contact switch 14 and the on/off state is recovered.

Due to the structure in which the separation lever 15, the test lever 16, the connection lever 17 and the execution shaft pin 41 are adopted in the present invention, the problem that the body switch 3 is directly contact fit with the separation contact switch 12, the test contact switch 13 and the connection contact switch 14 can be effectively avoided, and meanwhile, the problem that the contact switches are damaged by a linear guiding error of the guide rail 22 can be further solved. It is not difficult to imagine, referring to Fig. 1, that, because the body switch 3 is provided on the guide rail 22, the linear guiding precision of the guide rail 22 that moves in a y direction provided by the body switch 3 has the following features: the linear guiding error in a z direction is very little, and the linear guiding error in an x direction is very large, that is, a random offset in the z direction of the body switch 3 that moves in the y direction is very little, and a random offset in the x direction is very large. The rotation axis of each of the three rotating structures provided with the separation lever 15, the test lever 16 and the connection lever 17 is parallel to the axis of the execution shaft pin 41, i.e., the axial direction of the three locating shaft pins 12C, 13C and 14C is parallel to the axial direction of the execution shaft pin 41, and therefore, a knocking direction of the execution shaft pin 41 is parallel to the rotation axis of each of the three rotating pair structures and is perpendicular to the z direction; whereas because the linear guiding error of the body switch 3 in the z direction is very little, the maximum oscillation strokes of the separation lever 15, the test lever 16 and the connection lever 7 are more stable, and therefore the destructive influence of the knocking action of the execution shaft pin 41 to the position indicating assembly 1 and the three contact switches 12, 13 and 14 provided thereon is reduced to the minimum allowable degree.

In order to reduce the destructive influence of the knocking action of the execution shaft pin 41 to the three contact switches 12, 13 and 14, a preferred solution is to provide the separation forward gear protruding column 12a and the separation backward gear protruding column 12b and enable the separation forward gear protruding column 12a and the separation backward gear protruding column 12b to be in contact and blocking fit with the separation lever 15, and therefore the rotation range (i.e., the oscillation stroke) of the separation lever 15 can be further defined precisely; in the same way, the test lever 16 and the connection lever 17 may also adopt a structure of limiting the oscillation stroke precisely. To avoid repetition, the specific structure of defining the oscillation stroke precisely will be illustrated in the present invention with the separation lever 15 as an example: the execution shaft pin 41 knocks on and drives the separation lever 15 to make contact with the separation contact switch 12 when the body switch 3 is moved to the separation position, this contact triggers conversion of an on/off state of the separation contact switch 12, and meanwhile, the execution shaft pin 41 drives the separation lever 15 to make contact with the separation forward gear protruding column 12a; the execution shaft pin 41 is separated from the separation lever 15 when the body switch 3 is away from the separation position, a resetting force of the separation contact switch 12 drives the separation lever 15 to make contact with the separation backward gear protruding column 12b, and meanwhile, the separation contact switch 12 automatically resets under the action of the resetting force thereof and the on/off state thereof is converted. Of course, this structure of defining the oscillation stroke precisely has the following prominent beneficial effects: the adverse affect of the linear movement error of the body switch 3 and the execution shaft pin 41 thereof to each contact switch is completely avoided, and therefore, the oscillation strokes of the separation lever 15, the test lever 16 and the connection lever 17 may be designed completely in accordance with the service life requirements of the contact switches; or to say, the oscillation stroke is designed without the constraint of the linear movement error of the body switch 3 and the execution shaft pin 41 thereof, and therefore, the possibility is provided to prolong the service life and improve the working reliability of the contact switches, and it is also possible to reduce the manufacturing difficulty and the production cost of the guide rail 22.

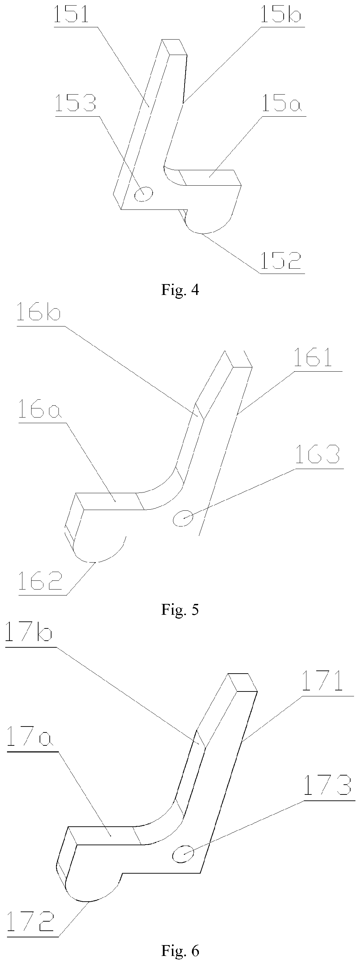

There may be a plurality of solutions in terms of the specific shape structure of the separation lever 15, and a preferred solution is as illustrated in Fig. 3 and Fig. 4: the separation lever 15 is provided with a first execution surface 151 which is in contact fit with an operating rod 121 of the separation contact switch 12, a first circular arc surface 152 which is in knocking fit with the execution shaft pin 41, a first separation forward gear surface 15a which is in blocking fit with the separation forward gear protruding column 12a, a first separation backward gear surface 15b which is in blocking fit with the separation backward gear protruding column 12b, and a first axle hole 153 for pivoting installation. There may be a plurality of solutions in terms of the specific shape structure of the test lever 16, and a preferred solution is as illustrated in Fig. 3 and Fig. 5: the test lever 16 is provided with a second execution surface 161 which is in contact fit with an operating rod 131 of the test contact switch 13, a second circular arc surface 162 which is in knocking fit with the execution shaft pin 41, a second test forward gear surface 16a which is in blocking fit with the test forward gear protruding column 13a, a second test backward gear surface 16b which is in blocking fit with the test backward gear protruding column 13b, and a second axle hole 163 for pivoting installation. There may be a plurality of solutions in terms of the specific shape structure of the connection lever 17, and a preferred solution is as illustrated in Fig. 3 and Fig. 6: the connection lever 17 is provided with a third execution surface 171 which is in contact fit with an operating rod 141 of the connection contact switch 14, a third circular arc surface 172 which is in knocking fit with the execution shaft pin 41, a third connection forward gear surface 17a which is in blocking fit with the test forward gear protruding column 14a, a third connection backward gear surface 17b which is in blocking fit with the connection backward gear protruding column 14b, and a third axle hole 173 for pivoting installation.

The shape structures of the separation lever 15, the test lever 16 and the connection lever 17 may be identical or may be different. But in view of facilitating machining and reducing the manufacturing cost, for convenience of installation and debugging, in order to make the layout of various parts and components on the fixing plate 11 be more reasonable, a preferred solution is illustrated in Fig. 3 to Fig. 6: the shape structures of the separation lever 15, the test lever 16 and the connection lever 17 are in the L shape respectively, such that these levers 15, 16 and 17 may be universal to reduce the varieties of parts.

Referring to Fig. 1 to Fig. 6, the working principle of the position indicating device of the present invention will be further described as below.

An operation process of installing the body switch 3 and moving the body switch 3 forwards is as follows:
the body switch 3 is put on the guide 22 of the drawer seat 2 and is then pushed with hands to a position where the body switch 3 could move no farther, that is, reach the separation position, and at this moment, the execution shaft pin 41 of the body switch 3 knocks on the first arc surface 152 on the separation lever 15 and jacks the first arc surface 152 up, such that the separation lever 15 rotates anticlockwise around the locating shaft pin 12C, and the first execution surface 151 of the separation lever 15 makes contact with the operating rod 121 of the separation contact switch 12 and presses the operating rod 121 downwards, and therefore contacts (i.e., the on/off state) of the separation contact switch 12 are converted, and at this moment, the body switch 3 may stay at the separation position stably;
under a state at the separation position, the handle is inserted into the drawer seat and is then rocked, such that the body switch 3 is driven by the handle screw rod assembly to continuously move forwards and be away from the separation position, and at this moment, the execution shaft pin 41 slides through the first arc surface 152 of the separation lever 15; by means of a self-resetting function of the separation contact switch 12, the operating rod 121 of the separation contact switch 12 pushes the separation lever 15 to rotate clockwise around the locating shaft pin 12C, till the separation lever 15 returns to the original resetting position, and contacts (i.e., the on/off state) of the separation contact switch 12 are automatically converted into an original state, and at this moment, the body switch 3 is at a transition position (or an instantaneous position) between the separation position and the test position;
the handle is rocked continuously under a state at the transition position, such that the body switch 3 is driven by the handle screw rod assembly to move forwards to reach the test position, and at this moment, the execution shaft pin 41 of the body switch 3 knocks on the second arc surface 162 on the test lever 16 and jacks the second arc surface 162 up, such that the test lever 16 rotates anticlockwise around the locating shaft pin 13C, and the second execution surface 161 of the test lever 16 makes contact with the operating rod 131 of the test contact switch 13 and presses the operating rod 131 downwards, and therefore contacts (i.e., the on/off state) of the test contact switch 13 are converted, and at this moment, the body switch 3 may stay at the test position stably; the body switch 3 may be subject to a test operation, such as detection;
under a state at the test position, the handle is rocked continuously, such that the body switch 3 is driven by the handle screw rod assembly to continuously move forwards and be away from the test position, and at this moment, the execution shaft pin 41 slides through the second arc surface 162 of the test lever 16; by means of a self-resetting function of the test contact switch 13, the operating rod 131 of the test contact switch 13 pushes the test lever 16 to rotate clockwise around the locating shaft pin 13C, till the test lever 16 returns to the original resetting position, and contacts (i.e., the on/off state) of the test contact switch 13 are automatically converted into an original state, and at this moment, the body switch 3 is at a transition position (or an instantaneous position) between the test position and the connection position;
the handle is rocked continuously under a state at the transition position, such that the body switch 3 is driven by the handle screw rod assembly to move forwards to reach the connection position, and at this moment, the execution shaft pin 41 of the body switch 3 knocks on the third arc surface 172 on the connection lever 17 and jacks the third arc surface 172 up, such that the connection lever 17 rotates anticlockwise around the locating shaft pin 14C, and the third execution surface 171 of the connection lever 17 makes contact with the operating rod 141 of the connection contact switch 14 and presses the operating rod 141 downwards, and therefore contacts (i.e., the on/off state) of the connection contact switch 14 are converted, and at this moment, the body switch 3 enters a running state and can stay at the connection position for a long time, and under the state at the connection position, the body switch 3 may not move continuously forwards under the constraint of a known limiting mechanism (not shown in drawings) and may not move backwards.

An operation process of moving the body switch 3 backwards and detaching the same is as follows:
under a state at the connection position, the handle is rocked in a reverse direction, such that the body switch 3 is driven by the handle screw rod assembly to continuously move backwards and be away from the connection position, and at this moment, the execution shaft pin 41 is away from the third arc surface 172 of the connection lever 16; by means of a self-resetting function of the connection contact switch 14, the operating rod 141 of the connection contact switch 14 pushes the connection lever 17 to rotate clockwise around the locating shaft pin 14C, till the connection lever 17 returns to the original resetting position, and contacts (i.e., the on/off state) of the connection contact switch 14 are automatically converted into an original state, and at this moment, the body switch 3 is at a transition position (or an instantaneous position) between the test position and the connection position;
the handle is rocked continuously in a reverse direction under a state at the transition position, such that the body switch 3 is driven by the handle screw rod assembly to move backwards to reach the test position, and at this moment, the execution shaft pin 41 of the body switch 3 knocks on the second arc surface 162 on the test lever 16 and jacks the second arc surface 162 up, such that the test lever 16 rotates anticlockwise around the locating shaft pin 13C, and the second execution surface 161 of the test lever 16 makes contact with the operating rod 131 of the test contact switch 13 and presses the operating rod 131 downwards, and therefore contacts (i.e., the on/off state) of the test contact switch 13 are converted, and at this moment, the body switch 3 may stay at the test position stably; the body switch 3 may be subject to a test operation, such as detection;
at the test position, the handle is rocked continuously in a reverse direction, such that the body switch 3 is driven by the handle screw rod assembly to continuously move backwards and be away from the test position, and at this moment, the execution shaft pin 41 slides through the second arc surface 162 of the test lever 16; by means of a self-resetting function of the test contact switch 13, the operating rod 131 of the test contact switch 13 pushes the test lever 16 to rotate clockwise around the locating shaft pin 13C, till the test lever 16 returns to the original resetting position, and contacts (i.e., the on/off state) of the test contact switch 13 are automatically converted into an original state, and at this moment, the body switch 3 is at a transition position (or an instantaneous position) between the test position and the connection position;
the handle is rocked continuously in a reverse direction under a state at the transition position, such that the body switch 3 is driven by the handle screw rod assembly to move backwards to reach the separation position, and at this moment, the execution shaft pin 41 of the body switch 3 knocks on the first arc surface 152 on the separation lever 15 and jacks the first arc surface 152 up, such that the separation lever 15 rotates anticlockwise around the locating shaft pin 12C, and the first execution surface 151 of the separation lever 15 makes contact with the operating rod 121 of the separation contact switch 12 and presses the operating rod 121 downwards, and therefore contacts (i.e., the on/off state) of the separation contact switch 12 are converted, and at this moment, the body switch 3 may stay at the separation position stably; the body switch 3 may be detached safely from the guide rail 22 of the drawer seat 2.

These above-mentioned embodiments are provided for those skilled in the art to implement and use the present invention, and those skilled in the art may make various modifications or variations without departing from the concept of the present invention as defined by the appended claims.

## Claims

1. A circuit breaker comprising a drawer seat (2) provided with a big side plate (21) for fixing a guide rail (22), a body switch (3) of the circuit breaker and a handle screw rod assembly, wherein the body switch (3) of the circuit breaker is detachably installed on the guide rail (22) of the drawer seat (2), the handle screw rod assembly being configured to drive the body switch (3) to linearly move to the three positions where the body switch (3) and the drawer seat (2) are separated, tested and connected, and the body switch (3) can make a linear movement relative to the drawer seat (2) by means of the guide rail (22), the circuit breaker further comprising a position indicating device for indicating the separation position, the test position and the connected position of the body switch (3) relative to the drawer seat (2), the position indicating device comprising:
a position indicating assembly (1) which comprises a fixing plate (11) fixed on the big side plate (21) and a separation contact switch (12), a test contact switch (13), a connection contact switch (14), a separation forward gear protruding column (12a), a separation backward gear protruding column (12b), a test forward gear protruding column (13a), a testing backward protruding column (13b), a connection forward gear protruding column (14a) and a connection backward gear protruding column (14b) which are fixed on the fixing plate (11) respectively, and further comprises a separation lever (15), a test lever (16) and a connection lever (17) that are pivoted to the fixing plate (11) through rotating pair structures;
an indicating drive piece (4) which is fixed to a small side plate (31) of the body switch (3) parallel to the big side plate (21) of the drawer seat (2) and provided with an execution shaft pin (41) that is in knocking fit with the separation lever (15), the test lever (16) and the connection lever (17) of the position indicating assembly (1) respectively when the body switch (3) is moved to the three working positions of separation, test and connection, so that the separation lever (15) can be driven to be in contact fit with the separation contact switch (12), the test lever (16) can be driven to be in contact fit with the test contact switch (13), and the connection lever (17) can be driven to be in contact fit with the connection contact switch (14), by such knocking fit;
a rotation axis of each of the rotating structures being parallel to an axis of the execution shaft pin (41) of the indication drive piece (4);
the rotation axis of each of the rotating structures and the axis of the execution shaft pin (41) of the indication drive piece (4) being perpendicular to the big side plate (21) of the drawer seat (2);
the execution shaft pin (41) drives the separation lever (15) to make contact with the separation forward gear protruding column (12a), when the body switch (3) is moved to the separation position; the execution shaft pin (41) is separated from the separation lever (15) when the body switch (3) is away from the separation position, a resetting force of the separation contact switch (12) drives the separation lever (15) to make contact with the separation backward gear protruding column (12b);
the execution shaft pin (41) drives the test lever (16) to make contact with the test forward gear protruding column (13a), when the body switch (3) is moved to the test position; the execution shaft pin (41) is separated from the test lever (16) when the body switch (3) is away from the test position, a resetting force of the test contact switch (13) drives the test lever (16) to make contact with the test backward gear protruding column (13b);
the execution shaft pin (41) drives the connection lever (17) to make contact with the connection forward gear protruding column (14a), when the body switch (3) is moved to the test position; the execution shaft pin (41) is separated from the connection lever (17) when the body switch (3) is away from the connected position, a resetting force of the test connection switch (14) drives the connection lever (17) to make contact with the connection backward gear protruding column (14b).

2. The circuit breaker according to claim 1, **characterized in that** the separation lever (15) is provided with a first axle hole (153) for pivoting installation, a first execution surface (151) which is in contact fit with an operating rod (121) of the separation contact switch (12), a first circular arc surface (152) which is in knocking fit with the execution shaft pin (41), a first separation forward gear surface (15a) which is in blocking fit with the separation forward gear protruding column (12a), and a first separation backward gear surface (15b) which is in blocking fit with the separation backward gear protruding column (12b).

3. The circuit breaker according to claim 1, **characterized in that** the test lever (16) is provided with a second axle hole (163) for pivoting installation, a second execution surface (161) which is in contact fit with an operating rod (4) of the test contact switch (13), a second circular arc surface (162) which is in knocking fit with the execution shaft pin (41), a second test forward gear surface (16a) which is in blocking fit with the test forward gear protruding column (13a), and a second test backward gear surface (16b) which is in blocking fit with the test backward gear protruding column (13b).

4. The circuit breaker according to claim 1, **characterized in that** the connection lever (17) is provided with a third axle hole (173) for pivoting installation, a third execution surface (171) which is in contact fit with an operating rod (141) of the connection contact switch (14), a third circular arc surface (172) which is in knocking fit with the execution shaft pin (41), a third connection forward gear surface (17a) which is in blocking fit with the connection forward gear protruding column (14a), and a third connection backward gear surface (17b) which is in blocking fit with the connection backward gear protruding column (14b).

5. The circuit breaker according to claim 1, **characterized in that**:
the execution shaft pin (41) of the indicating drive piece (4) knocks on and drives the separation lever (15) to make contact with the separation contact switch (12) when the body switch (3) is moved to the separation position, and this contact triggers conversion of an on/off state of the separation contact switch (12); meanwhile, the execution shaft pin (41) drives the separation lever (15) to make contact with the separation forward gear protruding column (12a);
the execution shaft pin (41) of the indication drive piece (4) is separated from the separation lever (15) when the body switch (3) is away from the separation position, and a resetting force of the separation contact switch (12) drives the separation lever (15) to make contact with the separation backward gear protruding column (12b); meanwhile, the separation contact switch (12) automatically resets under the action of the resetting force thereof and the on/off state thereof is converted.

6. The circuit breaker according to claim 1, **characterized in that**:
the execution shaft pin (41) of the indicating drive piece (4) knocks on and drives the test lever (16) to make contact with the test contact switch (13) when the body switch (3) is moved to the test position, and this contact triggers conversion of an on/off state of the test contact switch (13); meanwhile, the execution shaft pin (41) drives the test lever (16) to make contact with the test forward gear protruding column (13a);
the execution shaft pin (41) of the indication drive piece (4) is separated from the test lever (16) when the body switch (3) is away from the test position, and a resetting force of the test contact switch (13) drives the test lever (16) to make contact with the test backward gear protruding column (13b); meanwhile, the test contact switch (13) automatically resets under the action of the resetting force thereof and the on/off state thereof is converted.

7. The circuit breaker according to claim 1, **characterized in that**:
the execution shaft pin (41) of the indicating drive piece (4) knocks on and drives the connection lever (17) to make contact with the connection contact switch (14) when the body switch (3) is moved to the connection position, and this contact triggers conversion of an on/off state of the connection contact switch (14); meanwhile, the execution shaft pin (41) drives the connection lever (17) to make contact with the connection forward gear protruding column (14a);
the execution shaft pin (41) of the indication drive piece (4) is separated from the connection lever (17) when the body switch (3) is away from the connection position, and a resetting force of the connection contact switch (14) drives the connection lever (17) to make contact with the connection backward gear protruding column (14b); meanwhile, the connection contact switch (14) automatically resets under the action of the resetting force thereof and the on/off state thereof is converted.

8. The circuit breaker according to claim 1, **characterized in that** the fixing plate (11) is fixedly installed on an inside surface of a big side plate (21) of the drawer seat (2); the separation lever (15), the test lever (16) and the connection lever (17) of the position indicating assembly (1) are of the same L-shaped structure respectively.

9. The circuit breaker according to claim 1, **characterized in that** the rotating pair structures include three locating shaft pins (12C, 13C and 14C) fixedly provided on the fixing plate (11), and a first axle hole (153), a second axle hole (163) and a third axle hole (173) that are provided in the separation lever (15), the test lever (16) and the connection lever (17) respectively.

## Patentansprüche

1. Stromkreisunterbrecher mit einem Schubladensitz (2), der mit einer großen Seitenplatte (21) zum Befestigen einer Führungsschiene (22) versehen ist, einem Körperschalter (3) des Stromkreisunterbrechers und einer Griffschraubstangenbaugruppe, wobei der Körperschalter (3) des Stromkreisunterbrechers an der Führungsschiene (22) des Schubladensitzes (2) abnehmbar installiert ist, wobei die Griffschraubstangenbaugruppe so konfiguriert ist, dass sie den Körperschalter (3) antreibt, um sich linear in die drei Positionen zu bewegen, in denen der Körperschalter (3) und der Schubladensitz (2) getrennt, getestet und verbunden sind, wobei der Körperschalter (3) mittels der Führungsschiene (22) eine lineare Bewegung relativ zum Schubladensitz (2) ausführen kann, wobei der Stromkreisunterbrecher ferner eine Positionsanzeigevorrichtung aufweist zum Anzeigen der Trennposition, der Testposition und der Verbunden-Position des Körperschalters (3) relativ zum Schubladensitz (2), wobei die Positionsanzeigevorrichtung aufweist:
eine Positionsanzeigeeinrichtung (1), die aufweist eine an der großen Seitenplatte (21) befestigte Befestigungsplatte (11) und einen Trennkontaktschalter (12), einen Testkontaktschalter (13),
einen Verbindungskontaktschalter (14), eine Trenn-Vorwärtstrieb-Vorsprungsäule (12a), eine Trenn-Rückwärtstrieb-Vorsprungsäule (12b), eine Test-Vorwärtstrieb-Vorsprungsäule (13a), eine Test-Rückwärts-Vorsprungsäule (13b), eine Verbindungs-Vorwärtstrieb-Vorsprungsäule (14a) und eine Verbindungs-Rückwärtstrieb-Vorsprungsäule (14b), die jeweils an der Befestigungsplatte (11) befestigt sind, und ferner aufweist einen Trennhebel (15), einen Testhebel (16) und einen Verbindungshebel (17), die durch Rotations-Paar-Strukturen schwenkbar an der Befestigungsplatte (11) angebracht sind,
ein Anzeigeantriebsstück (4), das an einer kleinen Seitenplatte (31) des Körperschalters (3) befestigt ist parallel zur großen Seitenplatte (21) des Schubladensitzes (2) ist und das mit einem Ausführungsachszapfen (41) versehen ist, der jeweils zugeordnet mit dem Trennhebel (15), dem Testhebel (16) und dem Verbindungshebel (17) der Positionsanzeigeeinrichtung (1) in einem Anschlagsitz ist, wenn der Körperschalter (3) in die drei Arbeitspositionen des Trennens, Testens und Verbindens bewegt wird, so dass, mittels solchen Anschlagsitzes, der Trennhebel (15) angetrieben werden kann, um mit dem Trennkontaktschalter (12) im Kontaktsitz zu sein, der Testhebel (16) angetrieben werden kann, um mit dem Testkontaktschalter (13) im Kontaktsitz zu sein, und der Verbindungshebel (17) angetrieben werden kann, um mit dem Verbindungskontaktschalter (14) im Kontaktsitz zu sein,
wobei eine Drehachse jeder der Rotations-Strukturen parallel zu einer Achse des Ausführungsachszapfens (41) des Anzeigeantriebsstücks (4) ist,
wobei die Drehachse jeder der Rotations-Strukturen und die Achse des Ausführungsachszapfens (41) des Anzeigeantriebsstücks (4) senkrecht zur großen Seitenplatte (21) des Schubladensitzes (2) ist,
wobei der Ausführungsachszapfen (41) den Trennhebel (15) antreibt, um mit der Trenn-Vorwärtstrieb-Vorsprungsäule (12a) in Kontakt zu gelangen, wenn der Körperschalter (3) in die Trennposition bewegt wird, wobei der Ausführungsachszapfen (41) von dem Trennhebel (15) getrennt wird, wenn der Körperschalter (3) von der Trennposition entfernt ist, wobei eine Rückstellkraft des Trennkontaktschalters (12) den Trennhebel (15) antreibt, um mit der Trenn-Rückwärtstrieb-Vorsprungsäule (12b) in Kontakt zu gelangen,
wobei der Ausführungsachszapfen (41) den Testhebel (16) antreibt, um mit der Test-Vorwärtstrieb-Vorsprungsäule (13a) in Kontakt zu gelangen, wenn der Körperschalter (3) in die Testposition bewegt wird, wobei der Ausführungsachszapfen (41) von dem Testhebel (16) getrennt wird, wenn der Körperschalter (3) von der Testposition entfernt ist, wobei eine Rückstellkraft des Testkontaktschalters (13) den Testhebel (16) antreibt, um mit der Test-Rückwärtstrieb-Vorsprungsäule (13b) in Kontakt zu gelangen,
wobei der Ausführungsachszapfen (41) den Verbindungshebel (17) antreibt, um mit der Verbindungs-Vorwärtstrieb-Vorsprungsäule (14a) in Kontakt zu gelangen, wenn der Körperschalter (3) in die Testposition bewegt wird, wobei der Ausführungsachszapfen (41) von dem Verbindungshebel (17) getrennt wird, wenn der Körperschalter (3) von der Verbindungsposition entfernt ist,
wobei eine Rückstellkraft des Testverbindungsschalters (14) den Verbindungshebel (17) antreibt, um mit der Verbindungs-Rückwärtstrieb-Vorsprungsäule (14b) in Kontakt zu gelangen.

2. Stromkreisunterbrecher nach Anspruch 1, **dadurch gekennzeichnet, dass** der Trennhebel (15) versehen ist mit einem ersten Achsloch (153) zur schwenkbaren Installation, einer ersten Ausführungsfläche (151), die mit einer Betätigungsstange (121) des Trennkontaktschalter (12) im Kontaktsitz ist, einer ersten Kreisbogenfläche (152), die mit dem Ausführungsachszapfen (41) im Anschlagsitz ist, einer ersten Trenn-Vorwärtstrieb-Fläche (15a), die mit der Trenn-Vorwärtstrieb-Vorsprungsäule (12a) im Sperrsitz ist, und einer ersten Trenn-Rückwärtstrieb-Fläche (15b), die mit der Trenn-Rückwärtstrieb-Vorsprungsäule (12b) im Sperrsitz ist.

3. Stromkreisunterbrecher nach Anspruch 1, **dadurch gekennzeichnet, dass** der Testhebel (16) versehen ist mit einem zweiten Achsloch (163) zur schwenkbaren Installation, einer zweiten Ausführungsfläche (161), die mit einer Betätigungsstange (4) des Testkontaktschalters (13) im Kontaktsitz ist, einer zweiten Kreisbogenfläche (162), die mit
dem Ausführungsachszapfen (41) im Anschlagsitz ist, einer zweiten Test-Vorwärtstrieb-Fläche (16a), die mit der Test-Vorwärtstrieb-Vorsprungsäule (13a) im Sperrsitz ist, und einer zweiten Test-Rückwärtstrieb-Fläche (16b), die mit der Test-Rückwärtstrieb-Vorsprungsäule (13b) im Sperrsitz ist.

4. Stromkreisunterbrecher nach Anspruch 1, **dadurch gekennzeichnet, dass** der Verbindungshebel (17) versehen ist mit einem dritten Achsloch (173) zur schwenkbaren Installation, einer dritten Ausführungsfläche (171), die mit einer Betätigungsstange (141) des Verbindungskontaktschalters (14) im Kontaktsitz ist, einer dritten Kreisbogenfläche (172), die mit dem Ausführungsachszapfen (41) im Anschlagsitz ist, einer dritten Verbindung-Vorwärtstrieb-Fläche (17a), die mit der Verbindungs-Vorwärtstrieb-Vorsprungsäule (14a) im Sperrsitz ist, und einer dritten Verbindungs-Rückwärtstrieb-Fläche (17b), die mit der Verbindungs-Rückwärtstrieb-Vorsprungsäule (14b) im Sperrsitz ist.

5. Stromkreisunterbrecher nach Anspruch 1, **dadurch gekennzeichnet, dass**:
der Ausführungsachszapfen (41) des Anzeigeantriebsstücks (4) an den Trennhebel (15) anschlägt und diesen antreibt, um mit dem Trennkontaktschalter (12) in Kontakt zu gelangen, wenn der Körperschalter (3) in die Trennposition bewegt wird, und dieser Kontakt löst die Umwandlung eines Ein/Aus-Zustands des Trennkontaktschalters (12) aus, wobei indes der Ausführungsachszapfen (41) den Trennhebel (15) antreibt, um mit der Trenn-Vorwärtstrieb-Vorsprungsäule (12a) in Kontakt zu gelangen,
der Ausführungsachszapfen (41) des Anzeigeantriebsstücks (4) von dem Trennhebel (15) getrennt wird, wenn der Körperschalter (3) von der Trennposition entfernt ist, wobei eine Rückstellkraft des Trennkontaktschalters (12) den Trennhebel (15) antreibt, um mit der Trenn-Rückwärtstrieb-Vorsprungsäule (12b) in Kontakt zu gelangen, wobei sich der Trennkontaktschalter (12) automatisch zurückstellt unter der Wirkung der Rückstellkraft davon und der Ein/Aus-Zustand davon umgewandelt wird.

6. Stromkreisunterbrecher nach Anspruch 1, **dadurch gekennzeichnet, dass**:
der Ausführungsachszapfen (41) des Anzeigeantriebsstücks (4) an den Testhebel (16) anschlägt und diesen antreibt, um mit dem Testkontaktschalter (13) in Kontakt zu gelangen, wenn der Körperschalter (3) in die Testposition bewegt wird, und dieser Kontakt triggert die Umwandlung eines Ein/Aus-Zustands des Testkontaktschalters (13), wobei indes der Ausführungsachszapfen (41) den Testhebel (16) antreibt, um mit der Test-Vorwärtstrieb-Vorsprungsäule (13a) in Kontakt zu gelangen,
der Ausführungsachszapfen (41) des Anzeigeantriebsstücks (4) von dem Testhebel (16) getrennt wird, wenn der Körperschalter (3) von der Testposition entfernt ist, und eine Rückstellkraft des Testkontaktschalters (13) treibt den Testhebel (16) an, um mit der Test-Rückwärtstrieb-Vorsprungsäule (13b) in Kontakt zu gelangen, wobei indes der Testkontaktschalter (13) sich automatisch zurückstellt unter der Wirkung der Rückstellkraft davon und der Ein/Aus-Zustand davon umgewandelt wird.

7. Stromkreisunterbrecher nach Anspruch 1, **dadurch gekennzeichnet, dass**:
der Ausführungsachszapfen (41) des Anzeigeantriebsstücks (4) an den Verbindungshebel (17) anschlägt und diesen antreibt, um mit dem Verbindungskontaktschalter (14) in Kontakt zu gelangen, wenn der Körperschalter (3) in die Verbindungsposition bewegt wird, und dieser Kontakt triggert eine Umwandlung eines Ein/Aus-Zustands des Verbindungskontaktschalters (14), wobei indes der Ausführungsachszapfen (41) den Verbindungshebel (17) antreibt, um mit der Verbindungs-Vorwärtstrieb-Vorsprungsäule (14a) in Kontakt zu gelangen,
der Ausführungsachszapfen (41) des Anzeigeantriebsteils (4) vom Verbindungshebel (17) getrennt wird, wenn der Körperschalter (3) von der Verbindungsposition entfernt ist,
wobei eine Rückstellkraft des Verbindungskontaktschalters (14) den Verbindungshebel (17) antreibt, um mit der Verbindungs-Rückwärtstrieb-Vorsprungsäule (14b) in Kontakt zu gelangen,
wobei indes der Verbindungskontaktschalter (14) sich automatisch zurückstellt unter der Wirkung der Rückstellkraft davon und der Ein/Aus-Zustand davon umgewandelt wird.

8. Stromkreisunterbrecher nach Anspruch 1, **dadurch gekennzeichnet, dass** die Befestigungsplatte (11) fest an einer Innenfläche einer großen Seitenplatte (21) des Schubladensitzes (2) installiert ist, wobei der Trennhebel (15), der Testhebel (16) und der Verbindungshebel (17) der Positionsanzeigeeinrichtung (1) von jeweilig gleicher L-förmiger Struktur sind.

9. Stromkreisunterbrecher nach Anspruch 1, **dadurch gekennzeichnet, dass** die Rotations-Paar-Strukturen aufweisen drei Positionierachsstifte (12C, 13C und 14C), die fest an der Befestigungsplatte (11) vorgesehen sind, und ein erstes Achsloch (153), ein zweites Achsloch (163) und ein drittes Achsloch (173), die jeweils zugeordnet in dem Trennhebel (15), dem Testhebel (16) und dem Verbindungshebel (17) vorgesehen sind.

## Revendications

1. Disjoncteur comprenant un siège de tiroir (2) muni d'une grande plaque latérale (21) pour fixer un rail de guidage (22), un commutateur de corps (3) du disjoncteur et un ensemble de tige filetée de poignée, où le commutateur de corps (3) du disjoncteur est installé de manière amovible sur le rail de guidage (22) du siège de tiroir (2), l'ensemble de tige filetée de poignée étant configuré pour entraîner le commutateur de corps (3) pour qu'il se déplace linéairement vers les trois positions où le commutateur de corps (3) et le siège de tiroir (2) sont séparés, testés et connectés, et le commutateur de corps (3) peut effectuer un mouvement linéaire par rapport au siège de tiroir (2) au moyen du rail de guidage (22), le disjoncteur comprenant en outre un dispositif d'indication de position pour indiquer la position de séparation, la position de test et la position connectée du commutateur de corps (3) par rapport au siège de tiroir (2), le dispositif d'indication de position comprenant :
un ensemble d'indication de position (1) qui comprend une plaque de fixation (11) fixée sur la grande plaque latérale (21) et un commutateur de contact de séparation (12), un commutateur de contact de test (13), un commutateur de contact de connexion (14), une colonne faisant saillie vers l'avant du mécanisme de séparation (12a), une colonne faisant saillie vers l'arrière du mécanisme de séparation (12b), une colonne faisant saillie vers l'avant du mécanisme de test (13a), un test de colonne arrière faisant saillie (13b), une colonne faisant saillie vers l'avant du mécanisme de connexion (14a) et une colonne faisant saillie vers l'arrière du mécanisme de connexion (14b) qui sont fixés sur la plaque de fixation (11) respectivement, et comprend en outre un levier de séparation (15), un levier de test (16) et un levier de connexion (17) qui pivotent sur la plaque de fixation (11) par l'intermédiaire de structures de paires rotatives ;
une pièce d'entraînement d'indication (4) qui est fixée à une petite plaque latérale (31) du commutateur de corps (3) parallèlement à la grande plaque latérale (21) du siège de tiroir (2) et munie d'une goupille d'arbre d'exécution (41) qui est en couplage de frappe avec le levier de séparation (15), le levier de test (16) et le levier de connexion (17) de l'ensemble d'indication de position (1) respectivement lorsque le commutateur de corps (3) est déplacé vers les trois positions de travail de séparation, de test et de connexion, de sorte que le levier de séparation (15) peut être entraîné pour être en couplage de contact avec le commutateur de contact de séparation (12), le levier de test (16) peut être entraîné pour être en couplage de contact avec le commutateur de contact de test (13), et le levier de connexion (17) peut être entraîné pour être en couplage de contact avec le commutateur de contact de connexion (14), par un tel couplage de frappe ;
un axe de rotation de chacune des structures rotatives étant parallèle à un axe de la goupille d'arbre d'exécution (41) de la pièce d'entraînement d'indication (4) ;
l'axe de rotation de chacune des structures rotatives et l'axe de la goupille d'arbre d'exécution (41) de la pièce d'entraînement d'indication (4) étant perpendiculaires à la grande plaque latérale (21) du siège de tiroir (2) ;
la goupille d'arbre d'exécution (41) entraîne le levier de séparation (15) pour établir un contact avec la colonne faisant saille vers l'avant du mécanisme de séparation (12a), lorsque le commutateur de corps (3) est déplacé vers la position de séparation ; la goupille d'arbre d'exécution (41) est séparée du levier de séparation (15) lorsque le commutateur de corps (3) est éloigné de la position de séparation, une force de réinitialisation du commutateur de contact de séparation (12) entraîne le levier de séparation (15) pour établir un contact avec la colonne faisant saillie vers l'arrière du mécanisme de séparation (12b) ;
la goupille d'arbre d'exécution (41) entraîne le levier de test (16) pour établir un contact avec la colonne faisant saille vers l'avant du mécanisme de test (13a), lorsque le commutateur de corps (3) est déplacé vers la position de test ; la goupille d'arbre d'exécution (41) est séparée du levier de test (16) lorsque le commutateur de corps (3) est éloigné de la position de test, une force de réinitialisation du commutateur de contact de test (13) entraîne le levier de test (16) pour établir un contact avec la colonne faisant saillie vers l'arrière du mécanisme de test (13b) ;
la goupille d'arbre d'exécution (41) entraîne le levier de connexion (17) pour établir un contact avec la colonne faisant saillie vers l'avant du mécanisme de connexion (14a), lorsque le commutateur de corps (3) est déplacé vers la position de test ; la goupille d'arbre d'exécution (41) est séparée du levier de connexion (17) lorsque le commutateur de corps (3) est éloigné de la position connectée, une force de réinitialisation du commutateur de connexion de test (14) entraîne le levier de connexion (17) pour établir un contact avec la colonne faisant saillie vers l'arrière du mécanisme de connexion (14b).

2. Disjoncteur selon la revendication 1, **caractérisé en ce que** le levier de séparation (15) est pourvu d'un premier trou d'essieu (153) pour une installation pivotante, d'une première surface d'exécution (151) qui est en couplage de contact avec une tige d'actionnement (121) du commutateur de contact de séparation (12), d'une première surface d'arc de cercle (152) qui est en couplage de frappe avec la goupille d'arbre d'exécution (41), d'une première surface vers l'avant du mécanisme de séparation (15a) qui est en couplage de blocage avec la colonne faisant saillie vers l'avant du mécanisme de séparation (12a), et d'une première surface vers l'arrière du mécanisme de séparation (15b) qui est en couplage de blocage avec la colonne faisant saillie vers l'arrière du mécanisme de séparation (12b).

3. Disjoncteur selon la revendication 1, **caractérisé en ce que** le levier de test (16) est pourvu d'un second trou d'essieu (163) pour une installation pivotante, d'une seconde surface d'exécution (161) qui est en couplage de contact avec une tige d'actionnement (4) du commutateur de contact de test (13), d'une seconde surface d'arc de cercle (162) qui est en couplage de frappe avec la goupille d'arbre d'exécution (41), d'une seconde surface vers l'avant du mécanisme de test (16a) qui est en couplage de blocage avec la colonne faisant saillie vers l'avant du mécanisme de test (13a), et d'une seconde surface vers l'arrière du mécanisme de test (16b) qui est en couplage de blocage avec la colonne faisant saillie vers l'arrière du mécanisme de test (13b).

4. Disjoncteur selon la revendication 1, **caractérisé en ce que** le levier de connexion (17) est pourvu d'un troisième trou d'essieu (173) pour une installation pivotante, d'une troisième surface d'exécution (171) qui est en couplage de contact avec une tige d'actionnement (141) du commutateur de contact de connexion (14), d'une troisième surface d'arc de cercle (172) qui est en couplage de frappe avec la goupille d'arbre d'exécution (41), d'une troisième surface vers l'avant du mécanisme de connexion (17a) qui est en couplage de blocage avec la colonne faisant saillie vers l'avant du mécanisme de connexion (14a), et d'une troisième surface vers l'arrière du mécanisme de connexion (17b) qui est en couplage de blocage avec la colonne faisant saillie vers l'arrière du mécanisme de connexion (14b).

5. Disjoncteur selon la revendication 1, **caractérisé en ce que** :
la goupille d'arbre d'exécution (41) de la pièce d'entraînement d'indication (4) heurte et entraîne le levier de séparation (15) pour établir un contact avec le commutateur de contact de séparation (12) lorsque le commutateur de corps (3) est déplacé vers la position de séparation, et ce contact déclenche une conversion d'un état marche/arrêt du commutateur de contact de séparation (12) ; pendant ce temps, la goupille d'arbre d'exécution (41) entraîne le levier de séparation (15) pour établir un contact avec la colonne faisant saillie vers l'avant du mécanisme de séparation (12a) ;
la goupille d'arbre d'exécution (41) de la pièce d'entraînement d'indication (4) est séparée du levier de séparation (15) lorsque le commutateur de corps (3) est éloigné de la position de séparation, et une force de réinitialisation du commutateur de contact de séparation (12) entraîne le levier de séparation (15) pour établir un contact avec la colonne faisant saillie vers l'arrière du mécanisme de séparation (12b) ; pendant ce temps,
le commutateur de contact de séparation (12) se réinitialise automatiquement sous l'action de sa force de réinitialisation et son état marche/arrêt est converti.

6. Disjoncteur selon la revendication 1, **caractérisé en ce que** :
la goupille d'arbre d'exécution (41) de la pièce d'entraînement d'indication (4) heurte et entraîne le levier de test (16) pour établir un contact avec le commutateur de contact de test (13) lorsque le commutateur de corps (3) est déplacé vers la position de test, et ce contact déclenche la conversion d'un état marche/arrêt du commutateur de contact de test (13) ; pendant ce temps, la goupille d'arbre d'exécution (41) entraîne le levier de test (16) pour établir un contact avec la colonne faisant saillie vers l'avant du mécanisme de test (13a) ;
la goupille d'arbre d'exécution (41) de la pièce d'entraînement d'indication (4) est séparée du levier de test (16) lorsque le commutateur de corps (3) est éloigné de la position de test, et une force de réinitialisation du commutateur de contact de test (13) entraîne le levier de test (16) pour établir un contact avec la colonne faisant saillie vers l'arrière du mécanisme de test (13b) ; pendant ce temps, le commutateur de contact de test (13) se réinitialise automatiquement sous l'action de sa force de réinitialisation et son état marche/arrêt est converti.

7. Disjoncteur selon la revendication 1, **caractérisé en ce que** :
la goupille d'arbre d'exécution (41) de la pièce d'entraînement d'indication (4) heurte et entraîne le levier de connexion (17) pour établir un contact avec le commutateur de contact de connexion (14) lorsque le commutateur de corps (3) est déplacé vers la position de connexion, et ce contact déclenche une conversion d'un état marche/arrêt du commutateur de contact de connexion (14) ; pendant ce temps, la goupille d'arbre d'exécution (41) entraîne le levier de connexion (17) pour établir un contact avec la colonne faisant saillie vers l'avant du mécanisme de connexion (14a) ;
la goupille d'arbre d'exécution (41) de la pièce d'entraînement d'indication (4) est séparée du levier de connexion (17) lorsque le commutateur de corps (3) est éloigné de la position de connexion, et une force de réinitialisation du commutateur de contact de connexion (14) entraîne le levier de connexion (17) pour établir un contact avec la colonne faisant saillie vers l'arrière du mécanisme de connexion (14b) ; pendant ce temps,
le commutateur de contact de connexion (14) se réinitialise automatiquement sous l'action de sa force de réinitialisation et son état marche/arrêt est converti.

8. Disjoncteur selon la revendication 1, **caractérisé en ce que** la plaque de fixation (11) est installée de manière fixe sur une surface intérieure d'une grande plaque latérale (21) du siège de tiroir (2) ; le levier de séparation (15), le levier de test (16) et le levier de connexion (17) de l'ensemble d'indication de position (1) ont respectivement la même structure en L.

9. Disjoncteur selon la revendication 1, **caractérisé en ce que** les structures de paires rotatives comprennent trois goupilles d'arbre de positionnement (12C, 13C et 14C) prévues de manière fixe sur la plaque de fixation (11), et un premier trou d'essieu (153), un deuxième trou d'essieu (163) et un troisième trou d'essieu (173) qui sont prévus dans le levier de séparation (15), le levier de test (16) et le levier de connexion (17) respectivement.
